# EUROPÄISCHE PATENTSCHRIFT

(11) **EP 0 421 254 B1**
(45) Veröffentlichungstag und Bekanntmachung des Hinweises auf die Patenterteilung: **23.03.1994**
(21) Anmeldenummer: 90118447.3
(22) Anmeldetag: 26.09.1990
(51) Int. Cl.: H02G 15/013, H02G 15/192, H02G 15/117

(54) **Kabelmuffe zum Verbinden und Abzweigen von Kabeln, insbesondere Fernmeldekabeln**
Cable sleeve for connecting and tapping cables, particularly telecommunications cables
Manchon de câbles pour connexion et dérivation de câbles, en particulier de câbles de télécommunication

(30) Priorität: 30.09.1989 DE 3932734; 14.12.1989 DE 3941268
(43) Veröffentlichungstag der Anmeldung: 10.04.1991
(73) Patentinhaber: Stewing Kunststoffbetrieb GmbH Dorsten, 46282 Dorsten (DE)
(72) Erfinder: Dehling, Helmut, Dipl.-Ing., W-4270 Dorsten 11 (DE)
(74) Vertreter: Honke, Manfred, Dr.-Ing.

(56) Entgegenhaltungen:
- EP-A- 0 289 981
- DE-A- 2 413 623
- FR-A- 2 399 752
- FR-A- 2 596 215

## Beschreibung

Die Erfindung betrifft eine Kabelmuffe zum Verbinden und Abzweigen von Kabeln, insbes. Fernmeldekabeln unterschiedlicher Durchmesser, mit einem längsgeteilten Muffenrohr, einer zwischen den Stoßrändern der Längsteilung einpreßbaren Längsdichtung, mit zum stirnseitigen Abschluß des Muffenrohres von dem Muffenrohr ummantelten quergeteilten Dichtkörpern mit an unterschiedliche Kabeldurchmesser anpaßbaren Kabeldurchführungen, und mit zwischen dem Muffenrohr und den Dichtkörpern in eine umlaufende Fixierungsnut einpreßbaren Umfangsdichtungen.

Bei derartigen Kabelmuffen besteht ein ständiges Problem in der einwandfreien Abdichtung des Muffenrohres gegen die Dichtkörper und nach außen, denn die Montage des Muffenrohres und folglich das Verschließen der Kabelmuffe erfolgt regelmäßig vor Ort unter verhältnismäßig rauhen Bedingungen. In diesem Zusammenhang ist es bekannt, plastische Dichtungsmasse zwischen den Dichtungsflächen von Muffenrohr und Dichtkörpern zu verwenden. Jedoch ist die einwandfreie Verteilung der plastischen Dichtungsmasse umständlich und zeitaufwendig. Häufig wird auch die für eine einwandfreie Abdichtung erforderliche Sorgfalt vernachlässigt. Man kennt ferner den Einsatz von einteiligen Dichtungsringen, jedoch müssen dann die Dichtkörper selbst oder zumindest im Bereich der Fixierungsnut elastisch verformbar sein. In einigen Fällen finden zusätzlich plastisch verformbare Dichtungsringe Verwendung. Jedenfalls sind die bisherigen Maßnahmen zum Abdichten der Fugen zwischen dem Muffenrohr und den Dichtkörpern unbefriedigend.

Im einzelnen ist eine längsgeteilte Kabelmuffe mit Kragenverschluß und Verschlußkappen bekannt (FR-2 399 752), die mit einer Umfangsdichtung gegenüber dem Muffenrohr abgedichtet sind. Das längsgeteilte Muffenrohr wird durch eine zwischen abgewinkelten Dichtleisten einpreßbare Längsdichtung abgedichtet, zu deren Fixierung eine Klammer über die Dichtleisten gestülpt wird. Die Umfangsdichtung für die einteiligen Dichtkörper ist als geteilter elastischer Stab ausgebildet, der mit Dichtungsmaterial ummantelt ist. Der elastische Dichtungsstab wird in einer Fixierungsnut um den Dichtkörper herumgelegt, wobei die Teilungsenden des Dichtungsstabes sich überlappende Dichtzungen aufweisen. Diese Dichtzungen werden einfach übereinandergelegt. Darüber hinaus werden die Dichtungsstäbe im Bereich der Muffenenden über einen dritten Dichtungsstab, der senkrecht zu den beiden Dichtungsstäben verläuft, verbunden. Dieser dritte Dichtungsstab bildet die in die Kabelmuffe einpreßbare Längsdichtung mit einem Stabkern, der Befestigungszungen zum Festschrauben der Längsdichtung an den Dichtkörpern aufweist.

Außerdem kennt man eine Kabelmuffe aus Kunststoff mit elastischen Dichtungselementen in den Abdichtungsbereichen (EP-A-0 289 981), wobei eine Längsdichtung für das geteilte Muffenrohr in den Kreuzungsbereichen für stirnseitige Dichtkörper gegen Rundschnurdichtungen verpreßbare Anformungen aufweisen. Bei dieser bekannten Ausführungsform sind als Umfangsdichtungen elastische, endlose Ringdichtungen verwirklicht.

Der Erfindung liegt die Aufgabe zugrunde, eine Kabelmuffe zum Verbinden und Abzweigen von Kabeln, insbes. Fernmeldekabeln unterschiedlicher Durchmesser, der eingangs beschriebenen Art zu schaffen, bei der sich eine einwandfreie Abdichtung zwischen Muffenrohr und Dichtkörper im Zuge der Montage schnell und unkompliziert mit einfachen Mitteln erreichen läßt.

Diese Aufgabe löst die Erfindung bei einer gattungsgemäßen Kabelmuffe dadurch, daß die Umfangsdichtungen als geteilte Rundschnurdichtungen mit an ihren Teilungsenden sich überlappenden Dichtzungen ausgebildet sind, daß die Rundschnurdichtungen jeweils zwei beidseitig in den Stoßbereich der Dichtkörperhälften eingreifende Dichtansätze mit Fixierungsausnehmungen aufweisen, und daß jeweils zumindest eine Dichtkörperhälfte im Bereich der Fixierungsnut ein Lagerbett für die sich überlappenden Dichtzungen und im Stoßbereich beidseitig eine Lagerausnehmung mit jeweils einer Fixierungsnase aufweist, die in die Fixierungsausnehmung des in die lagerausnehmung eingesetzten und schließlich eingepreßten Dichtansatzes eingreift. - Die Erfindung geht von der Erkenntnis aus, daß sich dann eine montagefreundliche und funktionssichere Abdichtung des Muffenrohres gegen die darin eingesetzten Dichtkörper erreichen läßt, wenn einerseits geteilte Rundschnurdichtungen Verwendung finden, andererseits eine Fixierung dieser Rundschnurdichtungen im Zuge der Montage und darüber hinaus ein einwandfreie Abdichtung auch im Teilungsbereich der Rundschnurdichtungen möglich ist. Die einwandfreie Abdichtung im Teilungsbereich gelingt durch die sich überlappenden Dichtzungen, für welche die Fixierungsnuten ein eigenes Lagerbett aufweisen. Die für die einwandfreie Montage erforderliche Fixierung der Rundschnurdichtungen gelingt mit Hilfe der Fixierungsnasen in den Lagerausnehmungen, welche in die Fixierungsausnehmungen eingreifen. Da die Lagerausnehmungen sich beidseitig im Stoßbereich der Dichtkörperhälften befinden, wird durch die darin ein greifenden und schließlich verpreßten Dichtansätze an den Rundschnurdichtungen zugleich auch eine einwandfreie Stoßabdichtung gegen das Muffenrohr erreicht.

Weitere erfindungswesentliche Merkmale sind im folgenden aufgeführt. So können die Dichtzungen als sich keilförmig überlappende Zungen ausgebildet sein und ebenfalls in ihrem Lagerbett im Zuge der Montage des Muffenrohres mit Dichtwirkung verpreßt werden. Vorzugsweise dichten die flügelartig an die Rundschnurdichtungen an geformten Dichtansätze nicht nur die Stoßbereiche zwischen den Dichtkörperhälften ab, sondern außerdem eine sich jeweils bis zu den Lagerausnehmungen erstreckende Injektionskammer, die zur druckfesten Abdichtung der hindurchgeführten Kabel dient. - Nach einem Vorschlag der Erfindung mit selbständiger Bedeutung ist vorgesehen, daß die ebenfalls als Rundschnurdichtung ausgebildete Längsdichtung des Muffenrohres in den Kreuzungsbereichen mit den Umfangsdichtungen bzw. Rundschnurdichtungen der Dichtkörper gegen diese Umfangsdichtungen verpreßbare Anformungen aufweisen, so daß auch in den kritischen Kreuzungsbereichen der Längsteilung eine einwandfreie Abdichtung des Muffenrohres gegen die Dichtkörper bzw. umgekehrt erreicht wird. Dieser Dichteffekt wird dadurch optimiert, daß sich die Anformungen zugleich im Bereich der Dichtansätze der Umfangsdichtungen und folglich Bereich der Lagerausnehmungen zwischen den Stoßflächen der Dichtkörperhälften befinden. Dadurch wird in den Kreuzungsbereichen von Längsdichtung und Umfangsdichtungen ein besonders kompaktes Verpressen des Dichtungsmaterials erreicht. - Um eine einwandfreie Muffenmontage zu erreichen sieht die Erfindung weiter vor, daß das Muffenrohr an sehnen beiden Enden nach innen abgewinkelte Zentriernasen aufweist, die gegen entsprechende Zentrieranformungen auf der Stirnfläche der Dichtkörper als Drehsicherung anschlagen oder in entsprechende Zentriereinformungen eingreifen. Es wird also mit Hilfe der Muffenrohrzentrierung zugleich erreicht, daß die Längsdichtung und Umfangsdichtungen sich tatsächlich im Bereich der Dichtansätze an den Umfangsdichtungen bzw. der Lagerausnehmungen zwischen den Dichtkörperhälften kreuzen und dort verpreßt werden. Vorzugsweise weist das Muffenrohr einen elliptischen Querschnitt auf und sind die Dichtkörper als entsprechend elliptische Scheiben ausgebildet. Dadurch steht in der erfindungsgemäßen Kabelmuffe nicht nur hinreichender Innenraum für das Verbinden und Abzweigen von herkömmlichen Kabeln zur Verfügung, sondern insbes. auch für Spleißkassetten und Biegeradien wie sie bei der Verlegung von Glasfaserkabeln verwendet werden bzw. vorgeschrieben sind. Folglich läßt sich die erfindungsgemäße Kabelmuffe sowohl für das Verbinden und Abzweigen von üblichen Fernmeldekabeln als auch von Glasfaserkabeln einsetzen. Im übrigen kann das Muffenrohr bereichsweise in Rohrlängsrichtung verlaufende Versteifungssicken und/oder in Rohrumfangsrichtung verlaufende innenseitige Versteifungsrippen aufweisen, um ein Ausbeulen bei Druckbeanspruchungen zu vermeiden, wie sie bei druckdichter Kabelabdichtung auftreten.

Im folgenden wird die Erfindung anhand einer lediglich ein Ausführungsbeispiel darstellenden Zeichnung näher erläutert; es zeigen:

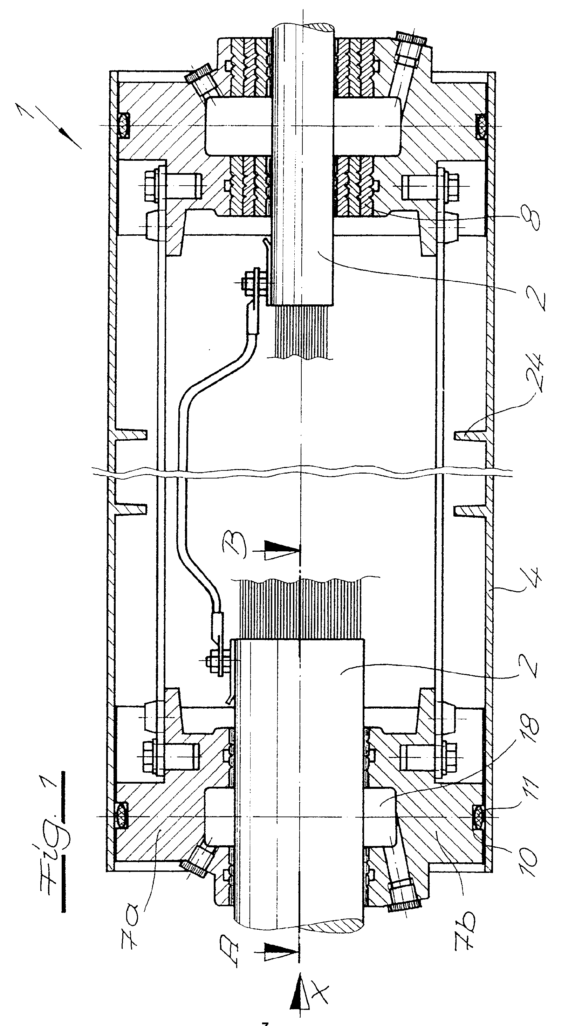

- Fig. 1: einen Vertikalschnitt durch eine erfindungsgemäße Kabelmuffe,

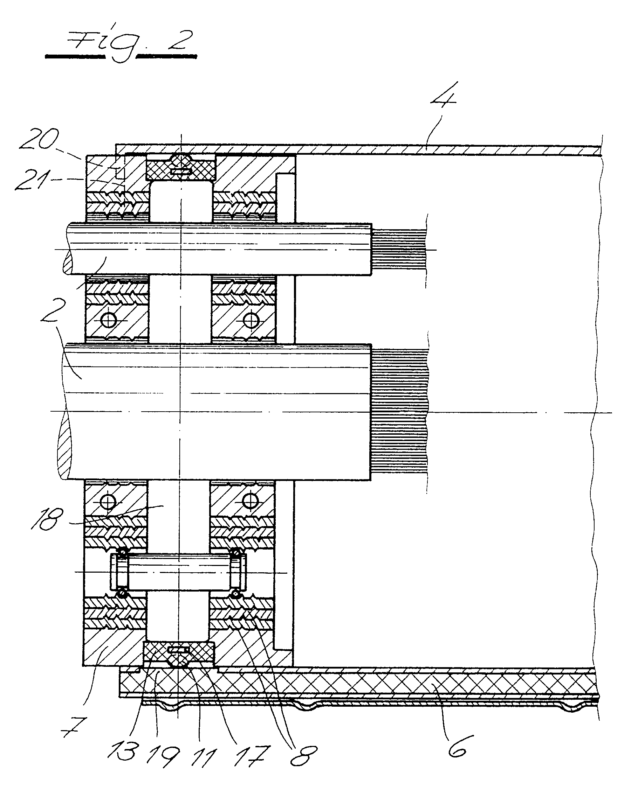

- fig. 2: einen Horizontalschnitt gemäß der Linie A-B durch den Gegenstand nach Fig. 1,

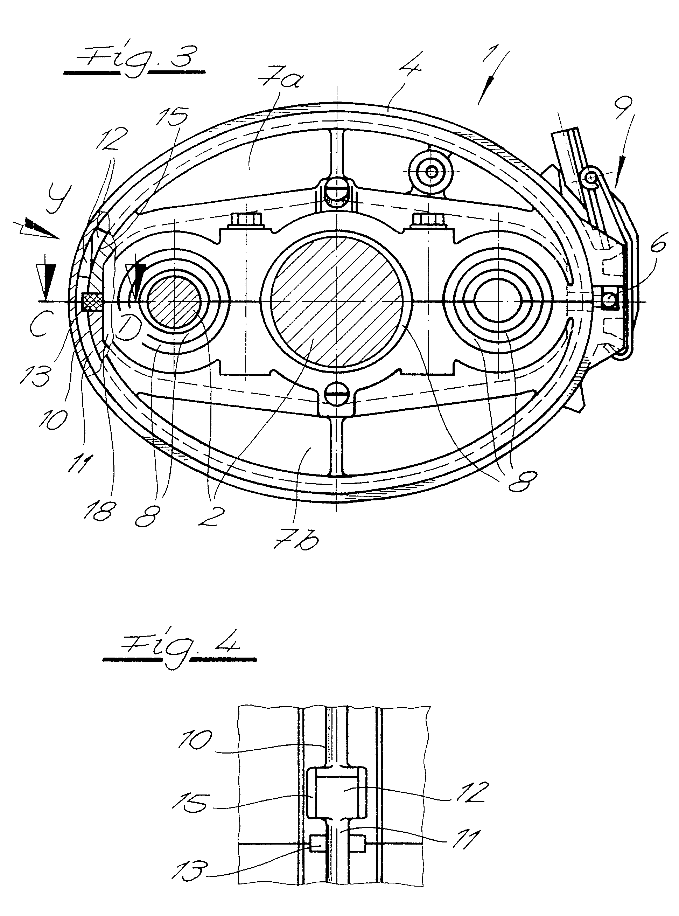

- Fig. 3: den Gegenstand nach Fig. 1 in Ansicht X,
- Fig. 4: ausschnittsweise eine Ansicht Y auf den Gegenstand nach Fig. 3 im Bereich einer Dichtungsüberlappung und Stoßabdichtung einer Umfangsdichtung ohne Muffenrohr,

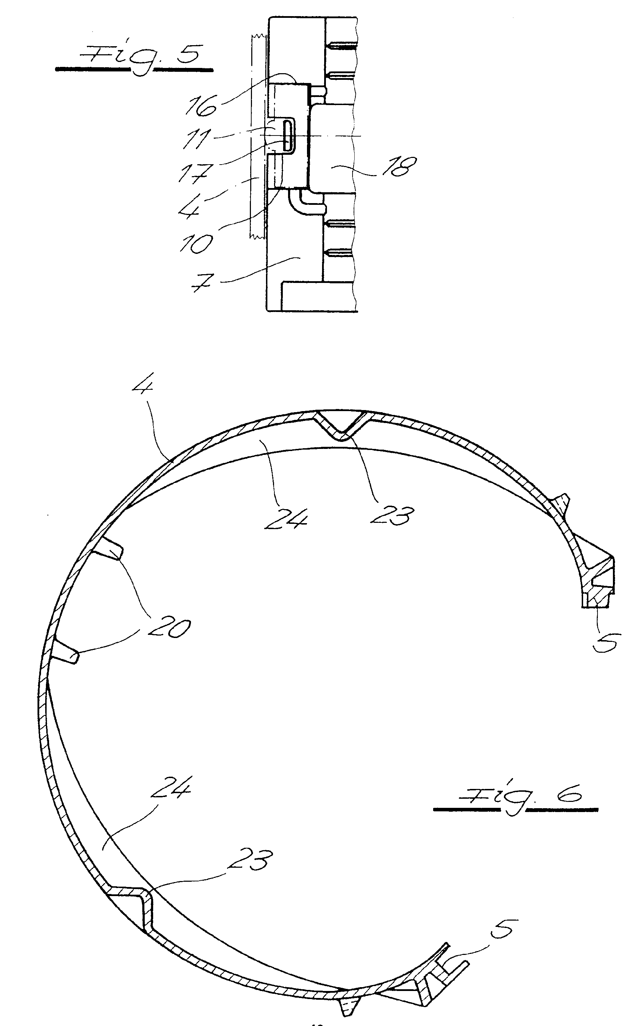

- Fig. 5: eine Lagerausnehmung mit Fixierungsnase gemäß Schnitt C-D durch den Gegenstand nach Fig. 3,

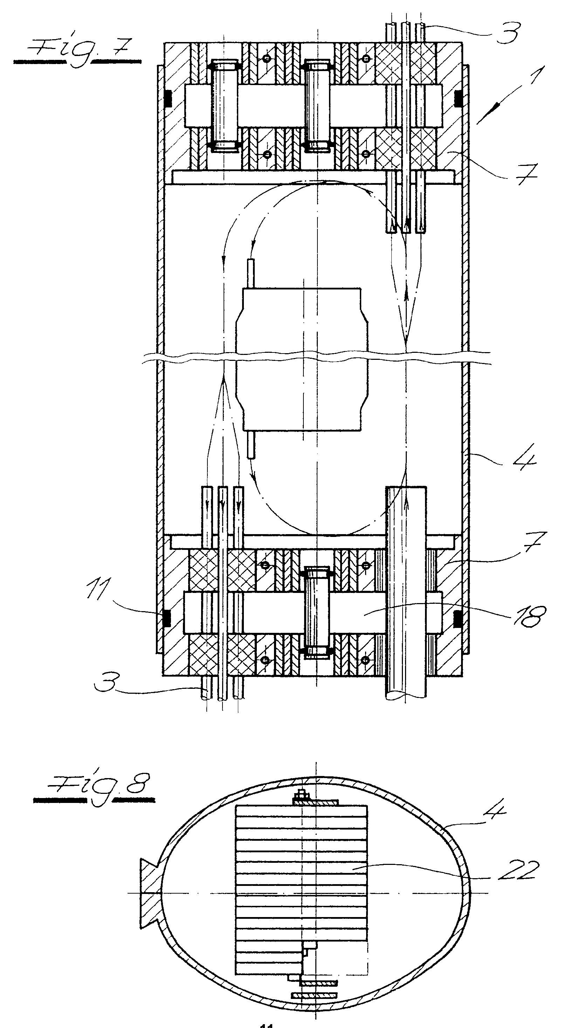

- Fig. 6: einen Radialschnitt durch das nicht montierte Muffenrohr für den Gegenstand nach Fig. 1,
- Fig. 7: in schematischer Darstellung eine Glasfaserkabelverlegung im Horizontalschnitt,

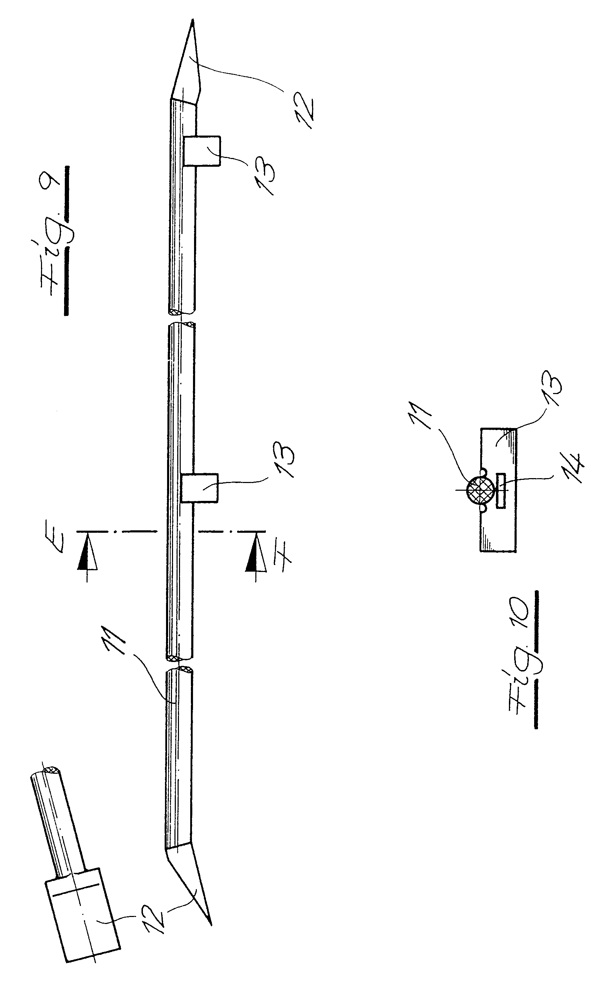

- Fig. 8: einen Vertikalschnitt durch den Gegenstand nach Fig. 7,
- Fig. 9: eine Umfangsdichtung für den Gegenstand nach Fig. 1,

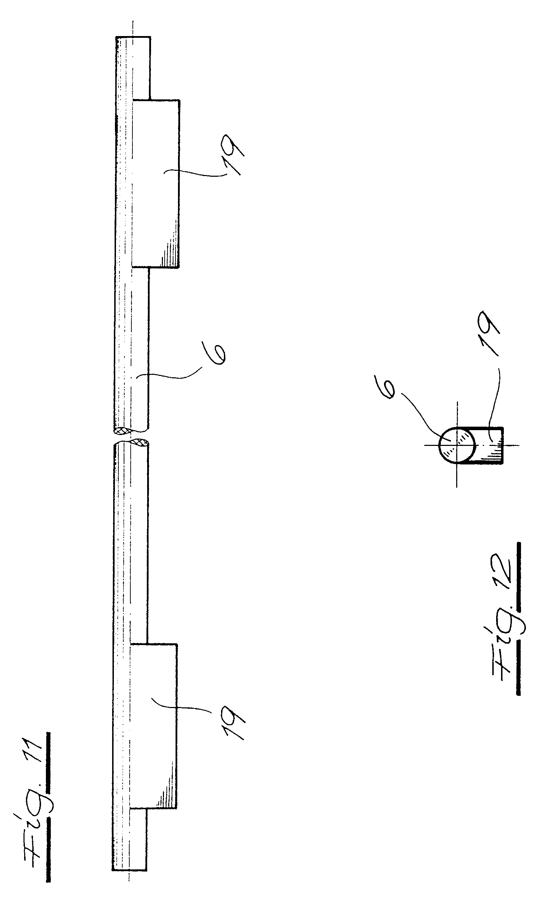

- Fig. 10: einen Querschnitt E-F durch den Gegenstand nach Fig. 9,
- Fig. 11: eine Längsdichtung für den Gegenstand nach Fig. 1 und
- Fig. 12: den Gegenstand nach Fig. 11 in Stirnansicht.

In den Figuren ist eine Kabelmuffe 1 zum Verbinden und Abzweigen von Kabeln 2, insbes. Fernmeldekabeln unterschiedlicher Durchmesser und auch Glasfaserkabeln 3 dargestellt. Die Kabellmuffe 1 weist in ihrem grundsätzlichen Aufbau ein längsgeteiltes Muffenrohr 4 aus biegeelastischem bzw. thermoplastischem Kunststoff mit einer zwischen den Stoßrändern 5 der Längsteilung anpreßbaren Längsdichtung 6 und mit zum stirnseitigen Abschluß des Muffenrohres 4 von dem Muffenrohr ummantelten mittig quergeteilten Dichtkörpern 7 mit an unterschiedliche Kabeldurchmesser anpaßbaren Kabeldurchführungen 8 auf. Das Schließen des Muffenrohres 4 erfolgt mittels Verschlußspanner 9, welche die Stoßränder 5 der Längsteilung hintergreifen. Zwischen dem Muffenrohr 4 und den Dichtkörpern 7 sind in umlaufenden Fixierungsnuten 10 einpreßbare Umfangsdichtungen 11 angeordnet. Die Umfangsdichtungen sind als geteilte Rundschnurdichtungen 11 mit an ihren Teilungsenden sich überlappenden Dichtzungen 12 ausgebildet. Die Rundschnurdichtungen 11 weisen jeweils zwei beidseitig in den Stoßbereich der Dichtkörperhälften 7a, 7b eingreifende Dichtansätze 13 mit Fixierungsausnehmungen 14 auf. Jeweils zumindest eine Dichtkörperhälfte 7a besitzt im Bereich der Fixierungsnut 10 ein Lagerbett 15 für die sich überlappenden Dichtzungen 12 und im Stoßbereich beidseitig eine Lagerausnehmung 16 mit jeweils einer Fixierungsnase 17, welche in die Fixierungsausnehmung 14 des betreffenden in die Lagerausnehmung 16 eingesetzten und nach dem Verspannen der Dichtkörperhälften 7a, 7b eingepreßten Dichtansatzes 13 eingreift. Die Dichtzungen 12 sind als sich keilförmig überlappende Zungen ausgebildet. Die flügelartig an die Rundschnurdichtungen 11 angeformten Dichtansätze 13 dichten eine sich bis zu den Lagerausnehmungen 16 erstreckende Injektionskammer 18 der Dichtkörper 7 ab. Diese Injektionskammer 18 dient zum druckfesten Abdichten der Kabel 2. Die ebenfalls als Rundschnurdichtung ausgebildete Längsdichtung 6 des Muffenrohres 4 weist in den Kreuzungsbereichen mit den Umfangsdichtungen 11 der Dichtkörper 7 gegen die Umfangsdichtungen verpreßbare Anformungen 19 auf. Diese Anformungen 19 befinden sich also nach erfolgter Montage des Muffenrohres 4 im Bereich der Dichtansätze 13 der Umfangsdichtungen 11 bzw. der dafür vorgesehenen Lagerausnehmungen 16. Das Muffenrohr 4 besitzt an seinen beiden Enden nach innen abgewinkelte Zentriernasen 20, die gegen entsprechende Zentrieranformungen 21 auf der Stirnfläche der Dichtkörper 7 als Drehsicherung anschlagen. Das Muffenrohr 4 besitzt einen elliptischen Querschnitt, während die Dichtkörper 7 als entsprechend elliptische Scheiben ausgebildet sind. Dadurch steht hinreichender Innenraum auch für das Verlegen von Glasfaserkabeln 3 zur Verfügung bzw. für die dazu erforderlichen Spleißkassetten 22 und vorgeschriebenen Biegeradien. Das Muffenrohr 4 weist bereichsweise in Rohrlängsrichtung verlaufende Versteifungssicken 23 und/oder in Umfangsrichtung verlaufende innenseitige Versteifungsrippen 24 auf.

## Patentansprüche

1. Kabelmuffe (1) zum Verbinden und Abzweigen von Kabeln (2), insbes. Fernmeldekabeln unterschiedlicher Durchmesser, mit einem längsgeteilten Muffenrohr (4), einer zwischen den Stoßrändern (5) der Längsteilung einpreßbaren Längsdichtung (6), mit zum stirnseitigen Abschluß des Muffenrohres (4) von dem Muffenrohr (4) ummantelten quergeteilten Dichtkörpern (7) mit an unterschiedliche Kabeldurchmesser anpaßbaren Kabeldurchführungen (8) und mit zwischen dem Muffenrohr (4) und den Dichtkörpern (7) in umlaufende Fixierungsnuten (10) einpreßbaren Umfangsdichtungen (11), **dadurch gekennzeichnet**, daß die Umfangsdichtungen als geteilte Rundschnurdichtungen (11) mit an ihren Teilungsenden sich überlappenden Dichtzungen (12) ausgebildet sind, daß die Rundschnurdichtungen (11) jeweils zwei beidseitig in den Stoßbereich der Dichtkörperhälften (7a, 7b) eingreifende Dichtansätze (13) mit Fixierungsausnehmungen (14) aufweisen, und daß jeweils zumindest eine Dichtkörperhälfte (7a) im Bereich der Fixierungsnut (10) ein Lagerbett (15) für die sich überlappenden Dichtzungen (12) und im Stoßbereich beidseitig eine Lagerausnehmung (16) mit jeweils einer Fixierungsnase (17) aufweist, die in die Fixierungsausnehmung (14) des in die Lagerausnehmung (16) eingesetzten Dichtansatzes (13) eingreift.

2. Kabelmuffe nach Anspruch 1, dadurch gekennzeichnet, daß die Dichtzungen (12) als sich keilförmig überlappende Zungen ausgebildet sind.

3. Kabelmuffe nach Anspruch 1 oder 2, dadurch gekennzeichnet, daß die flügelartig an die Rundschnurdichtungen (11) angeformten Dichtansätze (13) eine sich bis zu den Lagerausnehmungen (16) erstreckende Injektionskammer (18) der Dichtkörper (7) abdichten.

4. Kabelmuffe nach einem der Ansprüche 1 bis 3, dadurch gekennzeichnet, daß die als Rundschnurdichtung ausgebildete Längsdichtung (6) des Muffenrohres (4) in den Kreuzungsbereichen mit den Umfangsdichtungen (11) der Dichtkörper (7) gegen die Umfangsdichtungen verpreßbare Anformungen (19) aufweisen.

5. Kabelmuffe nach einen der Ansprüche 1 bis 4, dadurch gekennzeichnet, daß das Muffenrohr (4) an seinen beiden Enden abgewinkelte Zentriernasen (20) aufweist, die gegen entsprechende Zentrieranformungen (21) auf der Stirnfläche der Dichtkörper (7) als Drehsicherung anschlagen oder in entsprechende Zentriereinformungen eingreifen.

6. Kabelmuffe nach einem der Ansprüche 1 bis 5, dadurch gekennzeichnet, daß das Muffenrohr (4) einen elliptischen Querschnitt aufweist, und die Dichtkörper (7) als entsprechend elliptische Scheiben ausgebildet sind.

7. Kabelmuffe nach einem der Ansprüche 1 bis 6, dadurch gekennzeichnet, daß das Muffenrohr (4) bereichsweise in Rohrlängsrichtung verlaufende Versteifungssicken (23) und/oder in Rohrumfangsrichtung verlaufende innenseitige Versteifungsrippen (24) aufweist.

## Claims

1. A cable sleeve (1) for the connection and branching of cables (2), particularly communications cables of different diameters, with a longitudinally divided sleeve tube (4), a longitudinal seal (6) which can be pressed in between the abutting edges (5) of the longitudinal division, with transversely divided sealing bodies (7) for the end-face sealing of the sleeve tube (4), which are encased by the sleeve tube (4) and which have cable lead-throughs (8) adaptable to different cable diameters, and with circumferential seals (11) which can be pressed into surrounding fixing grooves (10) between the sleeve tube (4) and the sealing bodies (7), characterised in that the circumferential seals are constructed as divided round cord seals (11) with overlapping sealing tongues (12) at the ends of their division, that the round cord seals (11) each have two sealing projections (13) with fixing recesses (14), which sealing projections engage on both sides in the abutment region of the sealing body halves (7a, 7b), and that at least one sealing ring half (7a) in each case has a supporting bed (15) for the overlapping sealing tongues (12) in the region of the fixing groove (10) and has a supporting recess (16), with a fixing lug (17) in each case, on both sides in the abutment region, which fixing lug engages in the fixing recess (14) of the sealing projection (13) inserted in the supporting recess (16).

2. A cable sleeve according to claim 1, characterised in that the sealing tongues (12) are constructed as overlapping wedge-shaped tongues.

3. A cable sleeve according to claim 1 or 2, characterised in that the sealing projections (13), which are integrally formed in the manner of sidepieces on the round cord seals (11), seal an injection chamber (18) of the sealing bodies (7) which extends as far as the supporting recesses (16).

4. A cable sleeve according to any one of claims 1 to 3, characterised in that the longitudinal seal (6) of the sleeve tube (4), which longitudinal seal is constructed as a round cord seal, has formations (19) in the regions of intersection with the circumferential seals (11) of the sealing body (7) , which formations can be pressed against the circumferential seals.

5. A cable sleeve according to any one of claims 1 to 4, characterised in that the sleeve tube (4) has 90° offset centring lugs (20) at both its ends, which centring lugs strike against corresponding centring formations (21) on the end faces of the sealing bodies (7) as an anti-rotation lock, or which engage in corresponding centring indents.

6. A cable sleeve according to any one of claims 1 to 5, characterised in that the sleeve tube (4) has an elliptical cross-section, and the sealing bodies (7) are constructed as corresponding elliptical discs.

7. A cable sleeve according to any one of claims 1 to 6, characterised in that the sleeve tube (4) has stiffening beads (23) extending regionally in the longitudinal direction of the tube and/or internal stiffening beads (24) extending in the circumferential direction of the tube.

## Revendications

1. Manchon de câble (1) pour jonction et dérivation de câbles (2), en particulier de câbles de télécommunications de diamètres différents, avec un tube de manchon (4) divisé longitudinalement, un joint longitudinal (6) pouvant être serré entre les bords de contact (5) de la division longitudinale, avec des corps d'étanchéité (7) divisés transversalement, entourés par le tube de manchon (4) pour l'obturation frontale du tube de manchon (4), avec des passages de câbles (8) adaptables à divers diamètres de câbles, et avec des joints étanches périphériques (11) pouvant être serrés entre le tube de manchon (4) et les corps d'étanchéité (7) dans des rainures de fixation périphériques (10),
**caractérisé** en ce que les joints périphériques sont sous la forme de cordons ronds divisés (11) avec, sur leurs extrémités de division, des languettes d'étanchéité (12) se chevauchant, en ce que les joints en cordons ronds (11) présentent chacun deux prolongements étanches (13) s'engageant des deux côtés dans la zone de jonction des moitiés (7a, 7b) du corps d'étanchéité, avec des évidements de fixation (14) et en ce que, chaque fois, au moins une moitié (7a) du corps d'étanchéité présente dans la zone de la rainure de fixation (10) une portée (15) pour les languettes d'étanchéité (12) se chevauchant, et dans la zone de contact, des deux côtés, un évidement de support (16) avec chaque fois un bec de fixation (17) qui s'engage dans l'évidement de fixation (14) du prolongement étanche (13) inséré dans l'évidement de support (16).

2. Manchon de câble selon la revendication 1, caractérisé en ce que les languettes d'étanchéité (12) sont sous la forme de languettes se chevauchant par leurs extrémités biseautées en coin.

3. Manchon de câble selon la revendication 1 ou 2, caractérisé en ce que les appendices (13) ménagés sous la forme d'ailettes sur les joints en cordons ronds (11) assurent l'étanchéité d'une chambre d'injection (18) des corps d'étanchéité (7) s'étendant jusqu'aux évidements de support (16).

4. Manchon de câble selon une des revendications 1 à 3, caractérisé en ce que le joint d'étanchéité longitudinal (6), en forme de cordon rond, du tube de manchon (4) présente dans les zones de croisement avec les joints périphériques (11) des saillants (19) pouvant être pressés contre les joints périphériques.

5. Manchon de câble selon une des revendications 1 à 4, caractérisé en ce que le tube de manchon (4) présente sur ses deux extrémités des becs de centrage (20) inclinés qui butent contre des formations de centrage (21) correspondantes sur la surface frontale des corps d'étanchéité (7) en tant que blocage anti-rotation ou qui s'engagent dans des cavités de centrage correspondantes.

6. Manchon de câble selon une des revendications 1 à 5, caractérisé en ce que le tube de manchon (4) présente une section elliptique et les corps d'étanchéité (7) sont sous la forme de disques elliptiques correspondants.

7. Manchon de câble selon une des revendications 1 à 6, caractérisé en ce que le tube de manchon (4) présente localement dans son sens longitudinal des moulures raidisseuses (23) et/ou des nervures raidisseuses internes (24) s'étendant dans le sens périphérique du tube.
